(19)

Europäisches
Patentamt
European
Patent Office
Office européen
des brevets

(11) **EP 4 386 657 A1**

(12) **EUROPEAN PATENT APPLICATION**
published in accordance with Art. 153(4) EPC

(43) Date of publication:
**19.06.2024   Bulletin 2024/25**

(21) Application number: **23861677.5**

(22) Date of filing: **25.09.2023**

(51) International Patent Classification (IPC):
**G06T 5/00** $^{(2024.01)}$

(86) International application number:
**PCT/CN2023/120931**

(87) International publication number:
**WO 2024/078308 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022   CN 202211252059**

(71) Applicant: **Tencent Technology (Shenzhen)
Company Limited
Shenzhen, Guangdong 518000 (CN)**

(72) Inventors:
• **LIN, Chuming
Shenzhen, Guangdong 518057 (CN)**

• **WANG, Yanbo
Shenzhen, Guangdong 518057 (CN)**
• **LUO, Donghao
Shenzhen, Guangdong 518057 (CN)**
• **TAI, Ying
Shenzhen, Guangdong 518057 (CN)**
• **ZHANG, Zhizhong
Shenzhen, Guangdong 518057 (CN)**
• **XIE, Yuan
Shenzhen, Guangdong 518057 (CN)**
• **WANG, Chengjie
Shenzhen, Guangdong 518057 (CN)**

(74) Representative: **Nederlandsch Octrooibureau
P.O. Box 29720
2502 LS The Hague (NL)**

(54) **IMAGE OPTIMIZATION METHOD AND APPARATUS, ELECTRONIC DEVICE, MEDIUM, AND
PROGRAM PRODUCT**

(57)     Embodiments of this application disclose an image optimization method and apparatus, an electronic device, a medium, and a program product, which can be used in the field of artificial intelligence based on technologies such as computer vision. In the embodiments of this application, an image generation network, a to-be-optimized image, and a plurality of preset image features are obtained; a target feature is selected from the plurality of preset image features, the target feature and the to-be-optimized image meeting a preset similarity condition; an initial offset parameter is adjusted according to the image generation network, the target feature, and the to-be-optimized image, to obtain a target offset parameter; and the target feature and the target offset parameter are inputted to the image generation network, to generate an optimized image. In the embodiments of this application, the target feature corresponding to the to-be-optimized image may be selected from the plurality of preset image features, and the target offset parameter may be obtained through adjustment. The optimized image may be generated by using the target feature in combination with the target offset parameter, to improve an optimization effect of the image.

FIG. 1b

**Description**

RELATED APPLICATION

This application claims priority to Chinese Patent Application No. 202211252059.0, entitled "IMAGE OPTIMIZATION METHOD AND APPARATUS, ELECTRONIC DEVICE, MEDIUM, AND PROGRAM PRODUCT", and filed with the China National Intellectual Property Administration on October 13, 2022.

FIELD OF THE TECHNOLOGY

The present disclosure relates to the field of image processing technologies, and specifically, to image optimization.

BACKGROUND OF THE DISCLOSURE

In a process of imaging, transmission, and obtaining, an image is affected by external interference, imperfect transmission equipment, and other factors. Consequently, the image has problems such as noise, missing color, missing details, and low resolution, resulting in low image quality. To improve image quality, it is necessary to perform optimization processing on the image.

However, existing image optimization methods, such as methods for inpainting image noise and blur, have a poor optimization effect.

SUMMARY

Embodiments of the present disclosure provide an image optimization method and apparatus, an electronic device, a medium, and a program product, improving an optimization effect of an image.

An embodiment of the present disclosure provides an image optimization method, including: obtaining an image generation network, an initial image, and a plurality of preset image features; selecting a target feature from the plurality of preset image features, the target feature and the initial image meeting a preset similarity condition; inputting the target feature and an initial offset parameter to the image generation network, and adjusting the initial offset parameter according to a difference between an output image of the image generation network and the initial image, to obtain a target offset parameter; and inputting the target feature and the target offset parameter to the image generation network, to generate an optimized image.

An embodiment of the present disclosure further provides an image optimization apparatus, including: an obtaining unit, configured to obtain an image generation network, an initial image, and a plurality of preset image features; a determining unit, configured to select a target feature from the plurality of preset image features, the target feature and the initial meeting a preset similarity condition; an adjustment unit, configured to input the target feature and an initial offset parameter to the image generation network, and adjust the initial offset parameter according to a difference between an output image of the image generation network and the initial image, to obtain a target offset parameter; and a generation unit, configured to input the target feature and the target offset parameter to the image generation network, to generate an optimized image.

An embodiment of the present disclosure further provides an electronic device, including a processor and a memory, the memory storing a plurality of instructions; and the processor being configured to load the instructions from the memory, to perform steps of the image optimization method according to the embodiments of the present disclosure.

An embodiment of the present disclosure further provides a computer-readable storage medium, storing a plurality of instructions, the instructions being loaded by a processor, to perform steps of the image optimization method according to the embodiments of the present disclosure.

An embodiment of the present disclosure further provides a computer program product, including a computer program, the computer program, when executed by a processor, implementing steps of the image optimization method according to the embodiments of the present disclosure.

In the embodiments of the present disclosure, an image generation network, an initial image, and a plurality of preset image features may be obtained; a target feature is selected from the plurality of preset image features, the target feature and the initial image meeting a preset similarity condition; the target feature and an initial offset parameter are inputted to the image generation network, and the initial offset parameter is adjusted according to a difference between an output image of the image generation network and the initial image, to obtain a target offset parameter; and the target feature and the target offset parameter are inputted to the image generation network, to generate an optimized image.

In the present disclosure, the target feature corresponding to the initial image is selected from the plurality of image features, and with the target feature as a start point and in combination with the target offset parameter, the feature configured for generating the optimized image is determined, to generate the optimized image. Based on the target feature determined by using the preset image feature, correlation between features can be reduced, and a capability of controlling a visual feature in the image can be improved, to improve the optimization effect of the image. By adjusting the initial offset parameter, an input vector configured for generating the optimized image is close to an adjustment target, increasing authenticity of the optimized image, and improving the optimized effect of the image. In addition, the target feature and the initial image meet the preset similarity condition, which can reduce a distance between the target feature and a feature of the optimized image, reduce difficulty in adjusting the initial offset parameter, and improve optimization efficiency of the image.

BRIEF DESCRIPTION OF THE DRAWINGS

FIG. 1a is a schematic diagram of a scenario of an image optimization method according to an embodiment of the present disclosure;

FIG. 1b is a schematic flowchart of an image optimization method according to an embodiment of the present disclosure;

FIG. 1c is a schematic diagram of performing inversion search by using different methods;

FIG. 1d is a schematic flowchart of adjusting an initial offset parameter according to an embodiment of the present disclosure;

FIG. 1e is a schematic flowchart of adjusting a network parameter of an image generation network according to an embodiment of the present disclosure;

FIG. 2a is a schematic structural diagram of a StyleGAN-XL network according to an embodiment of the present disclosure;

FIG. 2b is a schematic flowchart of an image optimization method according to another embodiment of the present disclosure;

FIG. 2c is a schematic diagram of an iterative training process according to an embodiment of the present disclosure;

FIG. 2d is a schematic diagram of an optimized image generated by using different optimization methods according to an embodiment of the present disclosure;

FIG. 2e is a schematic diagram of a comparison result of different optimization methods in different inpainting tasks and different indices according to an embodiment of the present disclosure;

FIG. 3 is a schematic structural diagram of an image optimization apparatus according to an embodiment of the present disclosure; and

FIG. 4 is a schematic structural diagram of a computer device according to an embodiment of the present disclosure.

DESCRIPTION OF EMBODIMENTS

The following clearly and completely describes the technical solutions in embodiments of the present disclosure with reference to the accompanying drawings in the embodiments of the present disclosure. It is clear that the described embodiments are merely some but not all of the embodiments of the present disclosure. All other embodiments obtained by a person skilled in the art based on the embodiments of the present disclosure without creative efforts fall within the protection scope of the present disclosure.
The embodiments of the present disclosure provide an image optimization method and apparatus, an electronic device, a medium, and a program product.
In the embodiments of the present disclosure including the embodiments of both the claims and specification (hereinafter referred to as "all embodiments of the present disclosure"), the image optimization apparatus may be specifically integrated into the electronic device, and the electronic device may be a device such as a terminal or a server.

The terminal may be a device such as a mobile phone, a tablet computer, an intelligent Bluetooth device, a notebook computer, or a personal computer (PC). The server may be a single server or a server cluster that includes a plurality of servers.

In all embodiments of the present disclosure, the image optimization apparatus may be integrated into a plurality of electronic devices. For example, the image optimization apparatus may be integrated into a plurality of servers, and the image optimization method in the present disclosure is implemented by using the plurality of servers.

In all embodiments of the present disclosure, the server may be implemented in the form of a terminal.

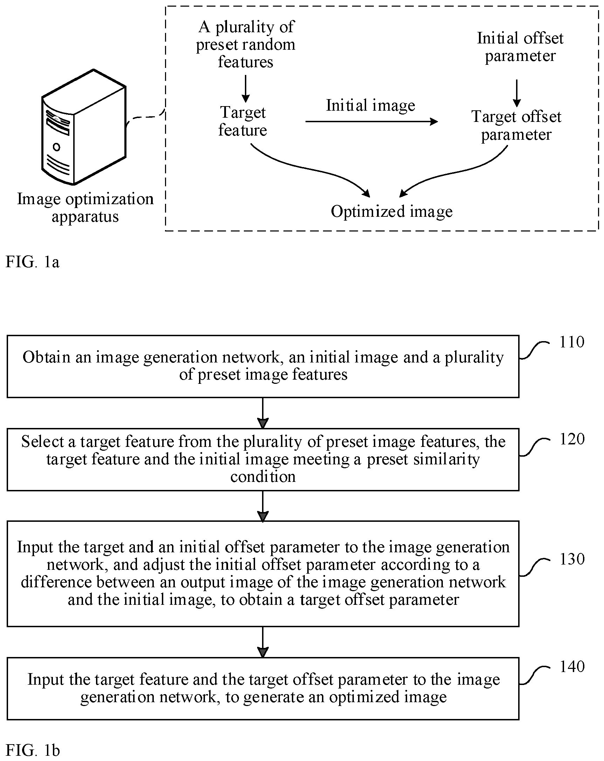

For example, referring to FIG. 1a, the image optimization method may be implemented by using the image optimization apparatus. The image optimization apparatus may be integrated into the server. The server may obtain an image generation network, an initial image, and a plurality of preset image features; select a target feature from the plurality of preset image features, the target feature and the initial image meeting a preset similarity condition; adjust an initial offset parameter according to the image generation network, the target feature, and the initial image, to obtain a target offset parameter; and input the target feature and the target offset parameter to the image generation network, to generate an optimized image.

A process of image generation is to transform an input vector (input feature) into a high-quality image. Image inversion is to derive (search for) a corresponding input vector by using an input image (which is not necessarily a high-quality image), and this process is referred to as inversion. This input vector is inputted to the image generation network to generate a high-quality image similar to the input image. The image generation network may refer to a neural network that can be configured to generate an image, and the image generation network can decode the input vector to reconstruct a high-quality image corresponding to the input vector. An input vector of a low-quality image may include random noise or a condition vector. Therefore, an input vector of a low-quality image in the image generation network may be derived by using an inversion technology, and the input vector may be processed by the image generation network to generate a corresponding high-quality image, implementing application such as image inpainting.

According to the image optimization method in all embodiments of tbe present disclosure, an input vector (that is, a feature vector obtained based on a target feature and an offset parameter) of the image generation network can be obtained through inversion search of the initial image and a plurality of preset image features, thereby generating an optimized image based on the input vector. The image optimization method in all embodiments of the present disclosure may be applied in the field of artificial intelligence based on technologies such as computer vision, and may be specifically applied in the fields of image super resolution, image inpainting, image enhancement, image editing, and the like.

Specifically, in all embodiments of the present disclosure, the target feature corresponding to the initial image may be used as a start point of the inversion search, the initial offset parameter is adjusted to obtain a target search result, and the target search result is used as an input vector of the image generation network. The input vector is then inputted to the image generation network, and the image generation network generates a high-quality optimized image.

Details are respectively described below. It may be understood that in a specific implementation of the present disclosure, when related data such as an image related to a user is used in a specific product or technology in all embodiments of the present disclosure, any data may be individually licensed or consented to by the user, and collection, use, and processing of the related data need to comply with relevant laws, regulations, and standards of relevant countries and regions.

Artificial Intelligence (AI) is a technology that uses digital computers to simulate human perception of an environment, acquisition of knowledge, and use of knowledge, which allows machines to have human-like perception, reasoning, and decision-making functions. Basic artificial intelligence technologies generally include technologies such as a sensor, a dedicated artificial intelligence chip, cloud computing, distributed storage, a big data processing technology, an operating/interaction system, and electromechanical integration. An artificial intelligence software technology mainly includes fields such as a computer vision technology, a speech processing technology, a natural language processing technology, machine learning/deep learning, self-driving, intelligent transportation.

Computer Vision (CV) is a technology that uses computers to replace human eyes to perform operations such as recognition and measurement on optimized images, and further perform processing. Computer vision technologies generally include technologies such as image generation, image recognition, image semantic understanding, image retrieval, virtual reality, augmented reality, synchronous positioning and map construction, self-driving, and intelligent transportation, and further include biometric feature recognition technologies such as common face recognition and fingerprint recognition. For example, image generation technologies include image coloring, image contour extraction, and the like.

With the research and progress of the artificial intelligence technology, the artificial intelligence technology is studied and applied in a plurality of fields such as a common smart home, a smart wearable device, a virtual assistant, a smart speaker, smart marketing, unmanned driving, self-driving, an unmanned aerial vehicle, a robot, smart medical care, smart customer service, Internet of Vehicles, self-driving, and intelligent transportation. It is believed that with the development of technologies, the artificial intelligence technology will be applied to more fields, and play an increasingly important role.

In all embodiments of the present disclosure, an image optimization method involving artificial intelligence is provided, as shown in FIG. 1b. A specific procedure of the image optimization method may be as follows:
110: Obtain an image generation network, an initial image, and a plurality of preset image features.

The initial image may refer to a low-quality image or an image that needs to be upgraded in quality, for example, the to-be-optimized image may have problems such as noise, missing colors, missing details, and resolution to result in a low-quality image. The present disclosure does not limit a type of the initial image, for example, the initial image may include, but is not limited to, a human face image, an animal image, a building image, a landscape image, and the like.

The image generation network may refer to a neural network that can be configured to generate an image. For example, the image generation network may be one or more of a convolutional neural network (CNN), a variational autoencoder (VAE), a generative adversarial network (GAN), and the like. For example, the generative adversarial network may alternatively be a generative network in an adversarial generative network.

The generative adversarial network (GAN) is a network framework that combines a generative network and a discriminative network, and may generate a high-quality image by inputting a Gaussian random vector into the generative network. In this way, the generative network in the generative adversarial network may be used as an image generation network in all embodiments of the present disclosure to generate a corresponding image based on image features and the like.

For example, the generative network in the generative adversarial network may include a plurality of convolutional layers, and the input vector, such as a w-vector, may be converted to affine transformation and random noise through a mapping network and inputted to each convolutional layer in the generative network. The affine transformation may be used to control a style of a generated image, the random noise may be used to enrich details of the generated image, and each convolutional layer can adjust the style of the image according to input affine transformation, and adjust the details of the image by using input random noise.

In some implementations, an original image may first be subjected to a degrading process to obtain the initial image, which reduces a feature dimension of the image while reserving effective information. Specifically, a method for obtaining the initial image includes:

obtaining an original image; and

performing image degrading processing on the original image, to obtain the initial image.

The image degrading processing may refer to a process used for reducing image quality. For example, the image degrading processing may include a method such as downsampling processing. The downsampling processing may include, but is not limited to, methods such as traversing each pixel point by a for loop in alternate rows and columns and matrix replication in alternate rows and columns. The downsampling processing can reduce the feature dimension of the image while reserving the effective information to avoid overfitting and to reduce an amount of computation in an image optimization process.

For example, the image degrading processing may be performed on the original image to obtain a low-resolution image, that is, the initial image $I_d = D(I)$, where D(.) is the image degrading processing, $I$ is the original image, and then the optimized image, that is, a high-resolution image, is generated by using the method in all embodiments of the present disclosure. The optimized image is filled with more accurate details, has a color closer to a real situation, and has richer texture details compared to the original image.

Image features may refer to features of random variables. It may be understood that the preset image features are features that are not related to the initial image. Under different conditions, due to chance factors, the variable may take on a variety of different values, with uncertainty and randomness, but a probability that these values fall within a specific range is certain, such variable is called a random variable. Random variables may be discrete or continuous.

A feature vector of the random variable is randomly distributed in a feature space according to a statistical trajectory. The feature vector is a point in the feature space, and the statistical trajectory may be determined by a probability distribution function. For example, a feature of the random variable may be obtained by using a probability distribution function such as a 0-1 distribution, a binomial distribution, a Poisson distribution, a geometric distribution, a uniform distribution, an exponential distribution, or a Gaussian distribution, and is used as the preset image feature in all embodiments of the present disclosure. For example, before the initial image is optimized, a feature vector of the random variable may be generated by a random number generator. In other words, a plurality of preset image features may be generated. The random number generator may conform to a type of random distribution of a statistical trajectory. For example, the random number generator may be a random number generator conforming to a Gaussian distribution.

For another example, the feature space may be a combination of n-dimensional features, the feature vector of the random variable is a point in the feature space, and an entirety of the feature vectors of different values forms the n-dimensional space. Therefore, the feature vector of the random variable may be transformed from one feature space to another feature space, to use a transformed feature as the preset image feature in all embodiments of the present disclosure.

In some implementations, the original feature (the feature vector of the random variable) obtained from the probability distribution function may be transformed into a preset space, to enhance an expressive ability of the feature. Specifically, a method for obtaining the plurality of preset image features includes:

obtaining, according to a distribution feature type of random variables, a plurality of original features through sampling; and

mapping the plurality of original features to a preset feature space, to obtain the plurality of preset image features.

A distributional feature may refer to a distribution manner of the random variable. For example, the distribution feature type may be a probability distribution function such as a 0-1 distribution, a binomial distribution, a Poisson distribution, a geometric distribution, a uniform distribution, an exponential distribution, or a Gaussian distribution. The feature vector of the random variable in an initial feature space may be used as the original feature. The initial feature space may refer to a feature space formed by the feature vector of the random variable.

The preset feature space may refer to a feature space set according to an actual application scenario. For example, the preset feature space may be a W space or the like.

It may be understood that a process of obtaining a plurality of image features by mapping the plurality of original feature is actually also a process of transforming the initial feature space formed by the plurality of original features to obtain the preset feature space formed by the plurality of preset image features. For example, a plurality of z vectors (that is, the plurality of original features) may be generated by the random number generator conforming to the Gaussian distribution, and then the z vectors are transformed from the Z space to the W space, to obtain a plurality of w-vectors (that is, the plurality of preset image features).

In all embodiments of the present disclosure, to control a style of a generated image, the preset feature space may be the W space. The W space is a subset of the feature space of an image in which vectors are more linearly related to each other. For example, a Z space may be obtained by Gaussian distribution sampling, the Z space is a Gaussian distribution space, and the Z-space may be transformed to obtain the W space. A w vector of the W space may be passed backward to the image generation network during generation of the image, to obtain a plurality of control vectors, so that different elements of the control vector can control different visual features, to control the style of the generated image. For example, a style of an image generated by the z vector is usually fixed. However, the style of the generated image may be changed by adjusting the w vector, for example, by adjusting the w vector for a plurality of times, the image may be adjusted from A style to B style. In this way, by using the w vector as the preset image feature, the style of the image generated by the w vector may be gradually changed, so that the style is similar to a style of the initial image, thereby improving optimization effect of the image.

In all embodiments of the present disclosure, mapping may be performed through a mapping network, which may include a plurality of fully connected layers. After the plurality of original features are inputted to the mapping network, a plurality of preset image features may be obtained after processing by the plurality of fully connected layers. For example, M z vectors $\left\{z_j\right\}_{j=1}^{M}$ may be obtained through sampling, where $\left\{z_j\right\}_{j=1}^{M} \sim \mathcal{N}(0,1)$, $\mathcal{N}$ is a Gaussian distribution, and the M z vectors form the Z space. M z vectors are inputted to the mapping network, and M w vectors are obtained from W=Mapping(Z), and the M w vectors form the W space, where Mapping(.) indicates processing of the mapping network. Specifically, the processing of the mapping network may be represented as $\left\{w_j\right\}_{j=1}^{M} = \phi_{Mapping}\left(\left\{z_j\right\}_{j=1}^{M}, c\right)$, where $\phi_{Mapping}$ indicates the mapping network, c is a specified category, and $\left\{w_j\right\}_{j=1}^{M}$ is the M w vectors.

120: Select a target feature from the plurality of preset image features, the target feature and the initial image meeting a preset similarity condition.

In all embodiments of the present disclosure, to obtain an input vector configured for generating the optimized image, an implied feature (that is, a target feature) corresponding to the initial image may be found in a plurality of image features, and the implied feature can be used as a start point of a vector search, to determine the input vector. Moreover, the target feature and the initial image meet the preset similarity condition, which can shorten a distance between a search start point of an inversion search and a target search result, reduce search difficulty, and improve the search efficiency.

The preset similarity condition may refer to a similarity condition set according to an actual application scenario.

For example, the preset similarity condition may be that a similarity between the target feature and a feature of the initial image is greater than a similarity threshold, or the similarity between the target feature and a feature of the initial image meets a preset order such as the highest similarity.

For example, the target feature may be determined by determining whether all the preset image features and the initial image meet the preset similarity. A part of the image features may also be obtained by screening from the plurality of preset image features by using methods such as clustering, and then it is determined whether the part of the image features and the initial image meet the preset similarity, to determine the target feature.

In some implementations, the plurality of preset image features may be classified through clustering processing, and the target feature may be determined from center features after classification, to reduce a number of features to be determined whether the similarity condition is met, and to improve the efficiency of determining the target feature. Specifically, selecting the target feature from the plurality of preset image features includes:

performing clustering processing on the plurality of preset image features, to obtain a plurality of feature clusters, the feature cluster including a center feature; and

selecting the target feature from the center features of the plurality of feature clusters includes:
Clustering processing may refer to a process of dividing all preset image features into a plurality of classes including similar preset image features. The feature cluster may be a class obtained by clustering, and the center feature may refer to a center of the class obtained by clustering, that is, a center of mass. A method of clustering processing may include a K-Means algorithm, a DBSCAN algorithm, a BIRCH algorithm, and the like. A parameter, such as a clustering radius, used in the clustering processing is not limited in all embodiments of the present disclosure, which may be set according to an actual application scenario.

For example, the M w vectors $\{w_j\}_{j=1}^{M}$ may be clustered by using the K-Means algorithm, to obtain N feature clusters and N centers of mass $\{w_i^{cen}\}_{i=1}^{N}$ of N classes. Moreover, a center of mass in the N centers of mass which has the highest similarity with the initial image may be determined as the target feature.

In some implementations, the target feature may be determined by comparing a similarity between an image corresponding to the center feature and the initial image, to increase accuracy of a determined target feature. Specifically, selecting the target feature from the center features of the plurality of feature clusters includes:

inputting the center feature to the image generation network, to generate a center image;

determining a target image from the center image, the target image being the center image that meets a preset similarity with the initial image; and

determining the center feature corresponding to the target image as the target feature.

For example, N center features may be inputted to the image generation network, and after processing of $\{I_i^{cen}\}_{i=1}^{N} = \phi_{Synthesis}(\{w_i^{cen}\}_{i=1}^{N})$ by the image generation network, N center images are outputted, where $\{I_i^{cen}\}_{i=1}^{N}$ indicates the N center images. An image similarity between each center image and the initial image $I_d$ is calculated, and a center image in the center images which has the highest image similarity is determined as the target image. The center feature generating the target image is the target feature.

In some implementations, a feature corresponding to a center image whose feature distance from the initial image is shortest may be determined as the target feature, so that the target feature is close to an adjustment target (the target search result), to shorten a distance between the target feature and the adjustment target. Specifically, determining the target image from the center images includes:

calculating a feature distance between the center image and the initial image; and

determining the center image that has a shortest feature distance from the initial image as the target image.

The feature distance may be a Euclidean distance, a Cosine distance, an absolute value distance, a Chebyshev distance, a Minkowski distance, a Mahalanobis distance, or the like.

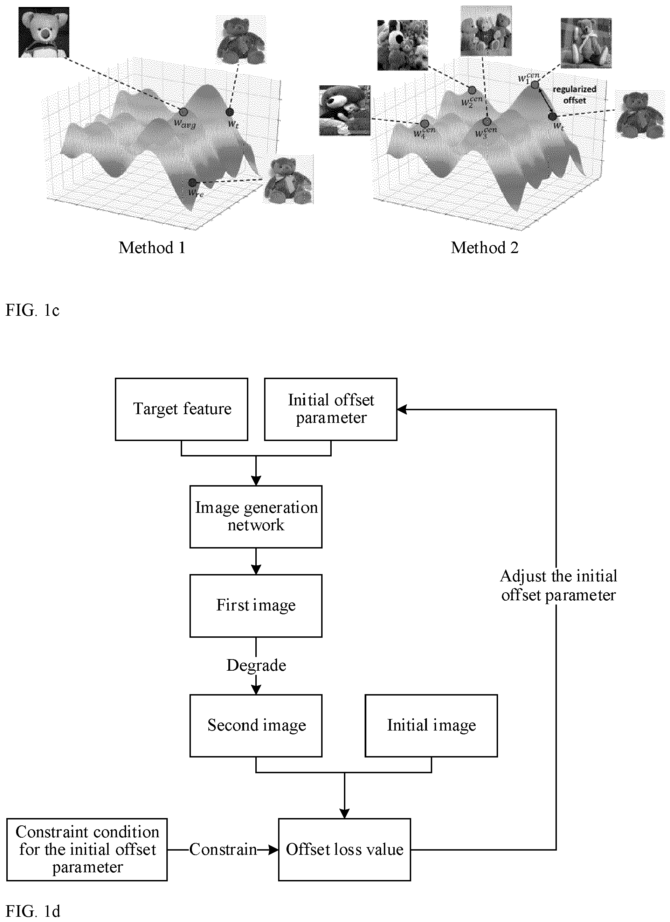

For example, as shown in FIG. 1c, if a method 1 in the figure is used, $w_{avg}$ is obtained by averaging the $w$ vectors in M W spaces, then $w_{avg}$ is used as a start point, that is, let $\hat{w} = w_{avg}$, the vector $\hat{w}$ is iteratively updated according to a loss function, the vector $\hat{w}$ after S times of iteration as a result vector of a final inversion search, and $w_{avg}$ is used as a start point to start searching. If $w_t$ in the method 1 is used as the target search result, there is a specific distance between $w_{avg}$ and $w_t$ spatially. Therefore, the search is difficult.

However, as shown in FIG. 1c, a method 2 in the figure is used. In other words, a method of clustering the $w$ vectors in the M W spaces in all embodiments of the present disclosure may be used, vectors of the plurality of original features are obtained through random sampling, and the vectors obtained through sampling are clustered, to obtain four clustering centers (centers of mass) $w_1^{cen}$, $w_2^{cen}$, $w_3^{cen}$, and $w_4^{cen}$. It is clear that in the four clustering centers of mass, a similarity between an image generated by a center of mass $w_1^{cen}$ which has the shortest distance from the target search result $w_t$ and an image corresponding to the target search result is the highest, and a similarity between an image generated by a center of mass $w_4^{cen}$ which has the longest distance from the target search result $w_t$ and the image corresponding to the target search result is the lowest. A difference between the initial image and the image corresponding to the target search result only lies in different image quality. Therefore, by respectively comparing similarities between images corresponding to the four centers of mass and the initial image, an image with the highest similarity may be found, which is the image generated by the center of mass $w_4^{cen}$, and the center of mass $w_4^{cen}$ is used as a start point to perform inversion search. It is clear that a distance between the center of mass $w_4^{cen}$ and the target search result $w_t$ is the shortest in space. In this way, the clustering method in all embodiments of the present disclosure can shorten a distance between a search start point and the target search result, reducing search difficulty, improving search efficiency, and improving efficiency of adjusting the initial offset parameter.

In all embodiments of the present disclosure, to improve the accuracy of the determined target feature, the process of calculating a feature distance between the center image and the initial image may include:

respectively performing feature extraction on the center image and the initial image, to obtain a first feature and a second feature; and

calculating a feature distance between the first feature and the second feature.

For example, the feature extraction may be performed on the center image and the initial image through a feature extraction network, to obtain the first feature and the second feature, a Euclidean distance or a Cosine distance between the first feature and the second feature is calculated, and a center image corresponding to the first feature which is closest to the second feature of the initial image is determined as the target image. For example, in N center images generated by the N centers of mass $\{w_i^{cen}\}_{i=1}^{N}$, the Kth image $I_k^{cen}$ has the shortest feature distance from the initial image, and a vector $w_k^{cen}$ corresponding to the image is the target feature.

The feature extraction network may refer to a neural network configured for image feature extraction. For example, the feature extraction network may include one or more of a convolutional neural network (CNN), a feedforward neural network (BP), a recurrent neural network (RNN), and the like.

130: Input the target feature and the initial offset parameter to the image generation network, and adjust the initial offset parameter according to a difference between an output image of the image generation network and the initial image, to obtain a target offset parameter.

For example, a difference, such as a similarity and a loss value, between the target feature and the initial image may be calculated, and the initial offset parameter is adjusted according to the difference to obtain the target offset parameter. An input vector of the optimized image generated by using the target offset parameter is close to the adjustment target (target search result). For example, the target feature may be adjusted for the first time by using an initial adjust parameter, to obtain an input vector of the image generation network, and through a plurality of adjustment processes, the input vector can continuously learn an implied feature (implied vector) in the initial image, so that the input vector continuously changes, and the input vector is closer to the initial image, thereby improving authenticity of the optimized image.

The offset parameter may refer to a parameter configured for adjusting a feature, to reduce a difference from the adjustment target. The initial offset parameter refers to an offset parameter that is used for adjusting the target feature and is set according to an application scenario or experience. For example, the initial offset parameter may be set as 0.

It may be understood that because the target feature is determined from the preset image features, there is a difference between the target feature and the initial image. Therefore, the initial offset parameter may be introduced herein to reduce an impact of the difference on the generated optimized image. For example, an offset item $w^{off}$ may be introduced, to adjust the target feature $w_k^{cen}$ to obtain $w = w_k^{cen} + w^{off}$, and an initial value of the offset item $w^{off}$ is the initial offset parameter. If the offset item $w^{off}$ is adjusted at least once, a value of $w^{off}$ obtained through adjustment for the last time may be used as the target offset parameter.

In some implementations, the initial offset parameter may be adjusted by calculating a loss value between the second image after degrading (deterioration) generated by using the target feature and the initial offset parameter and the initial image, to make the input vector configured for generating the optimized image closer to the adjustment target. In addition, during calculation of the loss value, a constraint condition for the initial offset parameter is added, to limit a range of the inversion search. Specifically, adjusting the initial offset parameter according to the image generation network, the target feature, and the initial image, to obtain a target offset parameter includes:

inputting the target feature and the initial offset parameter to the image generation network, to generate a first image;

performing image degrading processing on the first image, to obtain a second image;

calculating an offset loss value between the initial image and the second image based on a constraint condition for the initial offset parameter; and

adjusting the initial offset parameter according to the offset loss value, to obtain the target offset parameter.

The constraint condition may include a mandatory constraint, such as an equality constraint and a direct truncation constraint (limiting a maximum and minimum range), a soft constraint, such as an L1 constraint and an L2 constraint, and the like. For example, the loss value between the initial image and the second image may be calculated by using a loss function with the constraint condition. By adding the constraint condition in the loss function, overfitting of model training can be prevented, thereby increasing generalization capability, and avoiding distortion of the optimized image.

The loss function may include, but is not limited to, one of or a combination of a plurality of a structural similarity index (SSIM) loss function, a learned perceptual image patch similarity (LPIPS) loss function, a mean-square error (MSE) loss function, a quadratic loss function, and the like. The constraint condition for the initial offset parameter may refer to a condition configured for constraining the offset parameter.

For example, during inversion search, the target feature and the initial offset parameter may be used as the input vector of the image generation network, the first image is outputted by the image generation network. After the degrading processing is performed on the first image, the loss value between the second image and the initial image, that is, an offset loss value, is calculated by using the loss function with the constraint condition. The initial offset parameter is adjusted according to the offset loss value, so that the input vector configured for generating the optimized image is closer to the adjustment target, causing the second image to be closer to the initial image until the loss function converges.

For example, as shown in FIG. 1c, if the method 1 in the figure is used, because no limitation is added during search, a local optimal solution tends to be obtained in a search result, such as a result of $w_{re}$ in the method 1 in the figure, which is close to a target result $w_t$ in texture, but there is a gap in the color.

However, in the inversion search with the center of mass as the start point in all embodiments of the present disclosure, an inversion search range may be limited by using a regularization method, to make the target search result close to the target result in both color and texture, so that a quality-distortion balance is implemented in the generated image, and a high-quality image that is close to the input image is obtained.

In all embodiments of the present disclosure, the initial offset parameter may be optimized iteratively by using the offset loss value until the loss function converges to obtain the target offset parameter, so that the input vector configured for generating the optimized image is closer to the adjustment target through a plurality of iterations, and the offset parameter that expresses more accurately is obtained through optimization. Specifically, adjusting the initial offset parameter according to the offset loss value, to obtain the target offset parameter includes:

adjusting the initial offset parameter according to the offset loss value, to obtain an intermediate offset parameter; and

determining the intermediate offset parameter as the initial offset parameter, returning to the step of inputting the target feature and the initial offset parameter to the image generation network, to generate the first image, to the step of adjusting the initial offset parameter according to the offset loss value, to obtain an intermediate offset parameter, until the offset loss value converges, and determining the offset parameter obtained through adjustment for the last time as the target offset parameter.

For example, FIG. 1d shows a process of adjusting the initial offset parameter. The initial offset parameter is optimized iteratively. In each iteration, a first image is generated based on the target feature and an offset parameter obtained through a previous adjustment. A second image is obtained by degrading the generated first image, and an offset loss value between the second image and the initial image is calculated according to the loss function. The offset value refers to a difference between an output image of the image generation network and the initial image. Then the offset parameter obtained through the previous adjustment is adjusted according to the loss value, until the loss function converges. The offset parameter obtained through the last adjustment is used as the target offset parameter.

In some implementations, a range of the offset parameter is limited by using a regularized initial offset parameter, to improve efficiency and accuracy of adjusting the initial offset parameter. Specifically, the constraint condition for the initial offset parameter includes an offset parameter constraint item, and the process of calculating an offset loss value between the initial image and the second image based on a constraint condition for the initial offset parameter includes:

calculating a first loss between the initial image and the second image;

performing regularization processing on the initial offset parameter, to obtain the offset parameter constraint item; and

constraining the first loss item by using the offset parameter constraint item, to obtain the offset loss value.

The regularization processing may refer to a method of adding a constraint to a to-be-optimized parameter.

For example, the loss function configured for calculating the offset loss value may be $L_{op} = L_{LPIPS}(I_d, D(I_{syn})) + \lambda_1 L_2(I_d, D(I_{syn})) + \lambda_2 reg$. $L_{LPIPS}(I_d, D(I_{syn})) + \lambda_1 L_2(I_d, D(I_{syn}))$ is the first loss item, $L_{LPIPS}$ is the LPIPS loss function, $\lambda_2 reg$ is the offset parameter constraint item, $L_2$ is the quadratic loss function, $\lambda_1$ and $\lambda_2$ are hyperparameters, and $reg$ indicates performing the regularization processing on the offset parameter, where $reg = \|w^{off}\|_2$.

140: Input the target feature and the target offset parameter to the image generation network, to generate an optimized image.

For example, in all embodiments of the present disclosure, the target feature may be used as the start point of the inversion search, according to the initial image, the offset parameter is continuously adjusted through the inversion search, to obtain the target offset parameter. Then the input vector configured for generating the optimized image is obtained by using the target feature and the target offset parameter, and the optimized image is generated by using the input vector. It may be understood that if the optimized image is generated only by using the feature of the initial image, a capability of the optimized image for controlling a visual feature in the image is limited to the feature in the initial image. However, in all embodiments of the present disclosure, based on the target feature determined by using the preset image feature, correlation between features can be reduced, and a capability of controlling a visual feature in the image can be improved, to improve the image quality.

For example, the optimized image $I_{syn}$ may be generated by the generation network through

$$I_{syn} = \phi_{Synthesis}(w_k^{cen} + w^{off})$$ , by using the target feature $w_k^{cen}$ and the target offset parameter $w^{off}$, where $\phi_{Synthesis}$ indicates the image generation network.

In some implementations, after adjusting the offset parameter, the offset parameter may be fixed, to adjust the image generation network, thereby optimizing the image generation network and improving quality of the generated optimized image. Specifically, after adjusting the initial offset parameter according to the offset loss value, to obtain the target offset parameter, the method further includes:
adjusting a network parameter of the image generation network according to the target feature, the target offset parameter, and the initial image, to obtain an adjusted image generation network.

In all embodiments of the present disclosure, to further optimize the image generation network, after performing the step of adjusting a network parameter of the image generation network according to the target feature, the target offset parameter, and the initial image, to obtain an adjusted image generation network, the adjusted image generation network may be determined as an initial image generation network, and the step of adjusting an initial offset parameter according to the image generation network, the target feature, and the initial image, to obtain a target offset parameter is performed. In this way, the step of adjusting a network parameter of the image generation network according to the target feature, the target offset parameter, and the initial image, to obtain an adjusted image generation network and the step of adjusting an initial offset parameter according to the image generation network, the target feature, and the initial image, to obtain a target offset parameter are alternately performed, until a preset end condition is met.

The preset end condition may be an end condition set according to an application scenario. For example, the preset end condition may be that a number of times of alternately performing the foregoing steps reaches a threshold, or may be the loss function during adjustment of the initial offset parameter, and/or the loss function during adjustment of the network parameter of the image generation network converge to a loss threshold or is equal to 0, or the like.

During alternately performing the foregoing steps, in each alternating process, the initial offset parameter and/or the network parameter of the image generation network may be adjusted once or a plurality of times.

For example, the initial offset parameter may be first adjusted once by using the target feature and the initial image once, to obtain the target offset parameter; then the network parameter of the image generation network is adjusted once according to the target feature, the target offset parameter, and the initial image, to obtain the adjusted image generation network; and the target offset parameter is used as the initial offset parameter, the adjusted image generation network is used as the image generation network, the processes of adjusting the initial offset parameter once and adjusting the network parameter of the image generation network once are repeated. By analogy, the processes of adjusting the initial offset parameter and the image generation network are alternately repeated, until the loss function converges.

For another example, in each alternating process, the initial offset parameter may alternatively be adjusted iteratively for a plurality of times, until a preset number of iterations is met or the loss function corresponding to the offset loss value converges to a first loss threshold, and the network parameter of the image generation network is adjusted iteratively for a plurality of times, until a preset number of iterations is met or the loss function corresponding to a network loss value converges to a second loss threshold. In this way, the processes of adjusting the initial offset parameter and adjusting the image generation network are repeated alternately, until a number of times of alternately performing the foregoing steps reaches a threshold, or the loss function corresponding to the offset loss value and the loss function corresponding to the network loss value converge to a third loss threshold.

In some implementations, after the offset parameter is adjusted, the parameter of the image generation network may be adjusted by calculating a loss value between a fourth image that is generated by using the target feature and the initial offset parameter after degrading and the initial image, to continuously optimize the image generation network. In addition, the constraint condition for the initial offset parameter is added during calculation of the loss value, to limit a parameter range, thereby avoiding distortion of the optimized image due to overfitting. After the inputting the target feature and an initial offset parameter to the image generation network, and adjusting the initial offset parameter according to a difference between an output image of the image generation network and the initial image, to obtain a target offset parameter, the method includes:

inputting the target feature and the target offset parameter to the image generation network, to generate a third image;

performing image degrading processing on the third image, to obtain a fourth image;

calculating a network loss value between the initial image and the fourth image based on a constraint condition for the image generation network; and

adjusting a network parameter of the image generation network according to the network loss value, to obtain an adjusted image generation network, the adjusted image generation network being configured to generate the optimized image.

The constraint condition for the image generation network may refer to a condition configured for constraining the network parameter of the image generation network.

For example, after the initial offset parameter is adjusted to the target offset parameter, the offset parameter may be fixed, and only the parameter of the image generation network is optimized. In this way, the target feature and the target offset parameter may be used as the input vector of the image generation network, and the third image is outputted by the image generation network. After the degrading processing is performed on the third image, the loss value between the fourth image and the initial image, that is, the network loss value, is calculated by using the loss function with the constraint condition. Then the network parameter of the image generation network is adjusted according to the network loss value, until the loss function converges.

In all embodiments of the present disclosure, the network parameter of the image generation network may be adjusted iteratively by using the network loss value, until the loss function converges, and the adjusted image generation network is obtained, thereby obtaining a relatively good image generation network. Specifically, the adjusting a network parameter of the image generation network according to the network loss value, to obtain an adjusted image generation network includes:

adjusting a network parameter of a current image generation network according to the network loss value, to obtain an intermediate image generation network; and

determining the intermediate image generation network as a current image generation network, returning to the step of inputting the target feature and the target offset parameter to the image generation network, to generate the third image, to the step of adjusting the network parameter of the current image generation network according to the network loss value, to obtain the adjusted image generation network, until the offset loss value converges, and determining an intermediate image generation network obtained through adjustment for the last time as the adjusted image generation network.

The current image generation network may refer to a current image generation network whose network parameter is to be adjusted during adjustment.

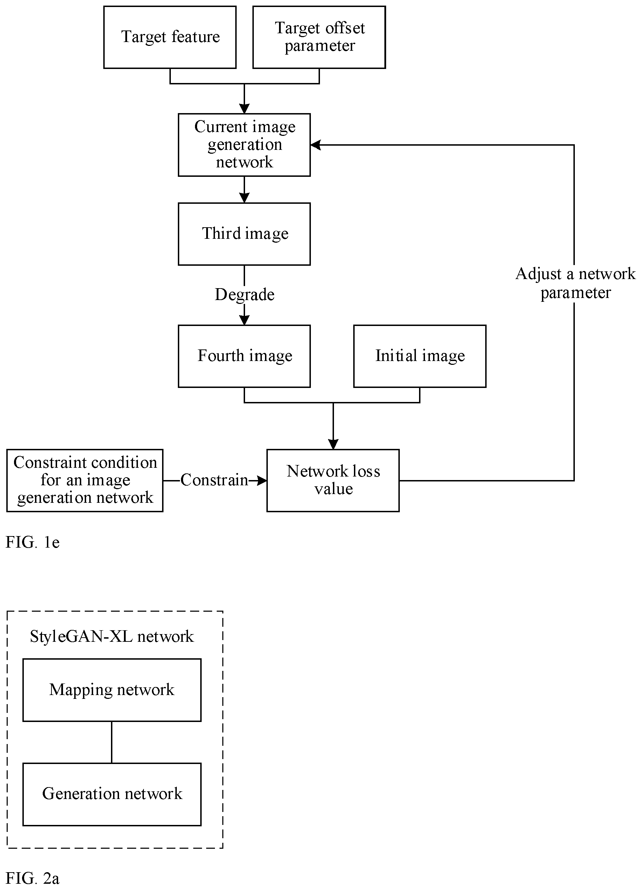

For example, FIG. 1e shows a process of adjusting the network parameter of the image generation network. The network parameter of the image generation network is adjusted iteratively. In each iteration process, the target feature and the target offset parameter are inputted to the current image generation network, to generate a third image. A fourth image is obtained by degrading of the generated third image. A network loss value between the fourth image and the initial image is calculated according to the loss function, and the network parameter of the current image generation network is adjusted according to the loss value. The iteration is continuously performed, the adjusted image generation network obtained in a previous iteration process serves as the current image generation network, until the loss function converges. The image generation network obtained through the last adjustment is used as the adjusted image generation network.

In some implementations, a range of the network parameter may be limited through a difference between the initial image generation network and the current image generation network, to improve efficiency and accuracy of adjusting the network parameter. Specifically, the constraint condition for the current image generation network includes a network constraint item, and the calculating a network loss value between the initial image and the fourth image based on a constraint condition for the image generation network includes:

calculating a second loss between the initial image and the fourth image;

calculating the network constraint based on an output result of an initial image generation network and an output result of a current image generation network; and

constraining the second loss item by using the network constraint item, to obtain the network loss value.

The initial image generation network may refer to the image generation network whose network parameter is not adjusted. For example, in a process of obtaining the adjusted image generation network through a plurality of iteration processes, the current image generation network in the first iteration process is the initial image generation network.

For example, the loss function configured for calculating the network loss value may be $L_{ft} = L_{LPIPS}(I_d, D(I_{syn}))$ + $\lambda_{L2}L_2 (I_d, D(I_{syn})) + \lambda_R L_R \cdot L_{LPIPS}(I_d, D(I_{syn})) + \lambda_{L2}L_2 (I_d, D(I_{syn}))$ is a second loss item, $L_{LPIPS}$ is the LPIPS loss function, and $\lambda_R L_R$ is a network constraint item, where $\lambda_{L2}$ and $\lambda_R$ are hyperparameters.

In some implementations, a difference between images generated by the initial image generation network and the current image generation network may be compared to determine the network constraint item. Specifically, the calculating the network constraint based on an output result of an initial image generation network and an output result of a current image generation network includes:

inputting the target feature and the target offset parameter to the initial image generation network, to generate an initial image, and inputting the target feature and the target offset parameter to the current image generation network, to generate a current image; and

calculating the network constraint based on the initial image and the current image.

For example, $L_R$ in a network loss item $\lambda_R L_R$ is a local regularity item, and may be presented as

$$L_R = L_{LPIPS}(x_r, x_r^*) + \lambda_{L2}^R L_{L2}(x_r, x_r^*)$$

, where $\lambda_{L2}^R$ is a hyperparameter, $x_r = \phi_{Synthesis}(w_r; \theta)$ indicates the image generated by the initial image generation network (that is, an initial image), and $x_r^* = \phi_{Synthesis}(w_r; \theta^*)$ indicates the image generated by the current image generation network (that is, a current image).

An image optimization solution provided in all embodiments of the present disclosure may be applied in various image optimization scenarios. For example, image inpainting is used as an example, an image generation network, an initial image, and a plurality of preset image features are obtained; a target feature is selected from the plurality of preset image features, the target feature and the initial image meeting a preset similarity condition; an initial offset parameter is adjusted according to the image generation network, the target feature, and the initial image, to obtain a target offset parameter; and the target feature and the target offset parameter are inputted to the image generation network, to generate an optimized image.

Based on the above, in all embodiments of the present disclosure, the target feature corresponding to the initial image may be selected from the plurality of image features, and with the target feature as a start point and in combination with the target offset parameter, the feature configured for generating the optimized image is determined, to generate the optimized image. Based on the target feature determined by using the preset image feature, correlation between features can be reduced, and a capability of controlling a visual feature in the image can be improved, to improve the optimization effect of the image. By adjusting the initial offset parameter, an input vector configured for generating the optimized image is close to an adjustment target, increasing authenticity of the optimized image, and improving the optimized effect of the image. In addition, the target feature and the initial image meet the preset similarity condition, which can reduce a distance between the target feature and a feature of the optimized image, reduce difficulty in adjusting the initial offset parameter, and improve optimization efficiency of the image.

According to the method described in the all embodiments of the present disclosure, the following further provides a detailed description.

In all embodiments of the present disclosure, an example in which a StyleGAN-XL network may be used to perform image optimization, the method in all embodiments of the present disclosure is described in detail.

The StyleGAN-XL network is a generative adversarial network that can generate high-resolution and richly varied images. In all embodiments of the present disclosure, the StyleGAN-XL network may be used as the image generation network. As shown in FIG. 2a, the StyleGAN-XL network may include a mapping network and a generative network. The mapping network may be configured to transform a z vector into a w vector, and the generative network may be configured to generate an image.

The StyleGAN-XL network used in all embodiments of the present disclosure may be pretrained on the ImageNet. In other words, the image generation network can generate an image of a corresponding category according to a specified category in the ImageNet. The ImageNet is a large visualization database for visual object recognition software research. There are 1024 categories in the ImageNet database, which means StyleGAN-XL can generate 1024 different categories of images.

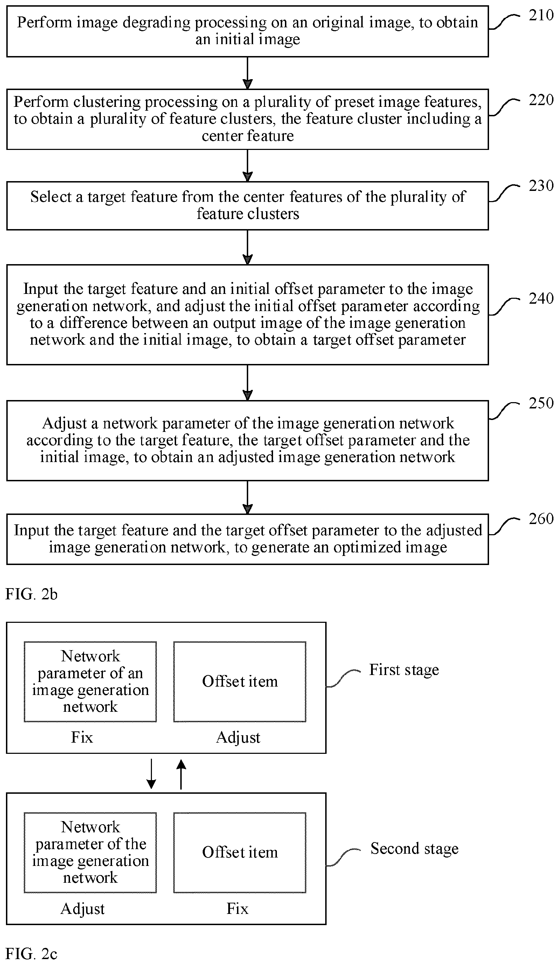

As shown in FIG. 2b, a specific process of an image optimization method is as follows:

210: Perform image degrading processing on the original image, to obtain the initial image.

For example, an input degraded image $I_d$ (initial image) is provided, which is obtained by degrading a high-definition image (an original image), that is, $I_d = D(I)$. $D(.)$ is a degrading process, $I$ is the high-definition image, and $\phi_{Synthesis}$ indicates a StyleGAN-XL generative network.

220: Perform clustering processing on the plurality of preset image features, to obtain a plurality of feature clusters, the feature cluster including a center feature.

For example, an objective of the image optimization method in all embodiments of the present disclosure is to find a latent vector $w$, to make the latent vector meets: $w = argmin\ L(D(\phi_{Synthesis}(w)),I_d)$, where $L(.)$ indicates a distance metric or an element space, and *argmin* indicates to make a value of $L(.)$ minimum.

To find the latent vector w, an initial search start point may be first found, which is an initial center of mass (that is, the target feature). $w$ vectors (that is, the plurality of preset image features) of M W spaces may be first obtained, and $w$ vector may be obtained from the mapping network $\phi_{Mapping}$ of the StyleGAN-XL: $\left\{w_j\right\}_{j=1}^{M} = \phi_{Mapping}\left(\left\{z_j\right\}_{j=1}^{M}, c\right)$, where $\left\{z_j\right\}_{j=1}^{M} \sim \mathcal{N}(0,1)$ and $\mathcal{N}$ are Gaussian distributions, and c is a specified category.

230: Select the target feature from the center features of the plurality of feature clusters.

For example, $\left\{w_j\right\}_{j=1}^{M}$ (that is, the plurality of preset image features) may be clustered by using a K-Means method, to obtain N centers of mass $\left\{w_i^{cen}\right\}_{i=1}^{N}$ (that is, the center feature). Then the N centers of mass are inputted to the image generation network to obtain N center images: $\left\{I_i^{cen}\right\}_{i=1}^{N} = \phi_{Synthesis}(\{w_i^{cen}\}_{i=1}^{N})$.

For the provided input image $I_d$, a "closest" image to $I_d$ may be found in the N images $\left\{I_i^{cen}\right\}_{i=1}^{N}$. For example, a feature space may be used to measure a distance between two images. For example, a visual geometric group (VGG) network may be used to extract a feature of an image, and then a Euclidean or Cosine distance of an extracted feature may be calculated to find the "closest" image to the input image. Assuming that the k$^{th}$ image $I_k^{cen}$ in the N images is the "closest" image, a vector $W_k^{cen}$ corresponding to the image is the latent vector to be optimized (that is, the initial search start point).

240: Input the target feature and the initial offset parameter to the image generation network, and adjust the initial offset parameter according to a difference between an output image of the image generation network and the initial image, to obtain a target offset parameter.

For example, in all embodiments of the present disclosure, an initial latent vector $W_k^{cen}$ is not directly optimized, but an offset item $w^{off}$ is fixedly introduced to the latent vector, to optimize the offset item. An initial value of the offset item is the initial offset parameter. The latent vector $w = w_k^{cen} + w^{off}$ may be obtained by using the latent vector and the offset item. In addition, the latent vector may be used as the input vector to be input into the image generation network, and iterative training is performing, to output an image $I_{syn} = \phi_{Synthesis}(w_k^{cen} + w^{off})$.

During training iteration, $w^{off}$ may be introduced to regularization: $reg = \|w^{off}\|_2$, to present a regularization contraint in a loss function of the iterative training.

250: Adjust a network parameter of the image generation network according to the target feature, the target offset parameter, and the initial image, to obtain an adjusted image generation network.

For example, during iterative training, the iterative training is divided into two stages. In an iterative training process as shown in FIG. 2c, the network parameter $\theta$ of the image generation network $\phi_{Synthesis}$ is fixed in the first stage, and only a parameter $w^{off}$ is optimized, that is, step 240. The $w^{off}$ parameter (the offset item) is fixed in the second stage, and only the network parameter $\theta$ is optimized, that is, step 250. During training, the two stages are alternately repeated, until a loss function converges, and training is stopped.

A loss function of the first stage is:

$$L_{op} = L_{LPIPS}\left(I_d, D\left(I_{syn}\right)\right) + \lambda_1 L_2\left(I_d, D\left(I_{syn}\right)\right) + \lambda_2 reg.$$

$L_{LPIPS}$ is a function calculating an index of LPIPS, and $L_2$ is a quadric loss function, where $\lambda_1$ and $\lambda_2$ are hyperparameters.

A loss function of the second stage is:

$$L_{ft} = L_{LPIPS}\left(I_d, D\left(I_{syn}\right)\right) + \lambda_{L2} L_2\left(I_d, D\left(I_{syn}\right)\right) + \lambda_R L_R.$$

$\lambda_{L2}$ and $\lambda_R$ are hyperparameters, and $L_R$ is a local regularity item, indicated as follows:

$$L_R = L_{LPIPS}(x_r, x_r^*) + \lambda_{L2}^R L_{L2}(x_r, x_r^*).$$

$\lambda_{L2}^R$ is a hyperparameter, $x_r = \phi_{Synthesis}(w_r; \theta)$ indicates an image generated by using an original network parameter (that is, the initial image), $x_r^* = \phi_{Synthesis}(w_r; \theta^*)$ indicates an image generated by using a current network parameter (that is, the current image), $w_r$ indicates interpolation code between a random potential vector and a key potential vector, and $L_{L2}$ is a mean square error.

A specific implementation process of the first stage may refer to a process shown in FIG. 1d, and a specific implementation process of the second stage may refer to a process shown in FIG. 1e and corresponding description in the all embodiments of the present disclosure, which is not repeated herein again.

260: Input the target feature and the target offset parameter to the adjusted image generation network, to generate an optimized image.

For example, after the loss functions of the two stages converge, the image generated in the last iteration may be used as the optimized image. It may be understood that in the last iteration, the image generation network to which the latent vector is inputted is the adjusted image generation network, and a parameter value corresponding to an offset item in the latent vector inputted to the adjusted image generation network is the target offset parameter.

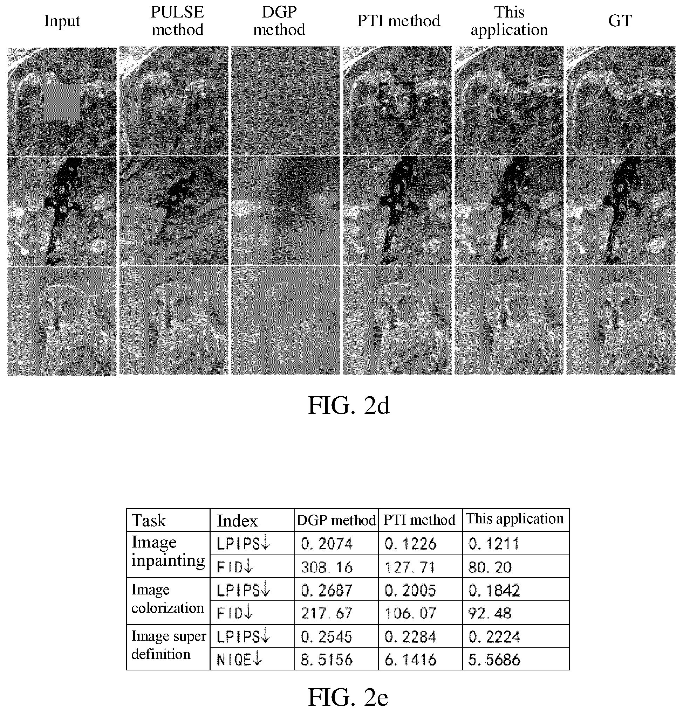

For example, comparing the image optimization method in all embodiments of the present disclosure, with optimization methods such as a PULSE (a latent space-based image super-resolution algorithm) method based on the StyleGAN-XL network, a DGP (am image-based prior probability distribution) method, and a PTI (key-tuning inversion) method, results can be obtained as shown in FIG. 2d and FIG. 2e, where GT indicates a high-quality reference image (the original image before the degradation processing).

FIG. 2d shows optimized images generated by using different optimization method. Each row indicates that a photo with a different degrading situation is inputted, and different methods are used to perform inversion, to obtain an optimized image outputted by the StyleGAN-XL network. The first row indicates that a piece of information is removed from a middle of an image, and missing information is filled in the middle by using an inversion technology. The second row indicates that color information is removed from an image, and a color of the image is filled by using the inversion technology. The third row indicates that an image is downsampled into a low-resolution image, and a corresponding high-resolution image is generated by using the inversion technology. It may be learned from FIG. 2d that compared to other methods, the image optimization method in all embodiments of the present disclosure, details are filled more accurately, the color is closer to a real situation (the reference image), and texture details are richer.

FIG. 2e shows a comparison result of different optimization methods for different inpainting tasks and different indices. In the figure, indices of the image optimization method in all embodiments of the present disclosure, the DGP method based on the StyleGAN-XL network, and the PTI method based on the StyleGAN-XL network may be compared respectively in three different image degrading inpainting tasks, which includes image inpainting, image colorization, and image super resolution (SR). In the three tasks, all of an LPIPS (image perceptual similarity) index, an FID (image quality assessment) index, and an NIQE (no reference image quality assessment) index of the image optimization method in all embodiments of the present disclosure can reach an optimal level.

It may be learned from the above that there is a large difference between an image through inversion by using existing optimization methods and an actual target result (a reference image), especially for a case that the input image is a degraded image, and these searched inversion results tend to be poor. For example, the DGP method is performing inversion on a BigGAN (large scale generative adversarial network). The BigGAN can only generate images with a resolution of $256 \times 256$, and the DGP method used on other generative networks has a poor effect. However, all embodiments of the present disclosure use the generative network based on the StyleGAN-XL network as an image generation network, which can generate high-resolution and richly varied images. By inverting the network, corresponding input vectors can be inverted and high-quality and high-resolution images can be generated for any image. In this way, in all embodiments of the present disclosure, when an image or a degraded image (a degraded image refers to an image with noise, missing color, missing details, low resolution, and the like) is provided, an input vector can be found in a corresponding latent space, so that the input vector can be fed into the generative network to generate a similar and high-quality image (that is, an optimized image).

To better implement the foregoing method, according to all embodiments of the present disclosure, an image optimization apparatus may be further provided. The image optimization apparatus may be specifically integrated into an electronic device, and the electronic device may be a device such as a terminal or a server. The terminal may be a device such as a mobile phone, a tablet computer, an intelligent Bluetooth device, a notebook computer, or a personal computer. The server may be a single server or a server cluster that includes a plurality of servers.

For example, in all embodiments of the present disclosure, by using an example in which the image optimization apparatus is specifically integrated into the server, the method in the embodiments of the present disclosure is described in detail.

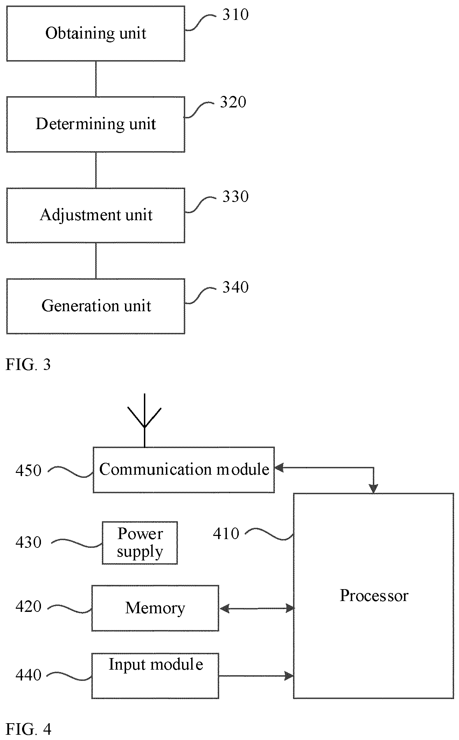

For example, as shown in FIG. 3, the image optimization apparatus may include an obtaining unit 310, a determining unit 320, an adjustment unit 330, and a generation unit 340.

1. Obtaining unit 310

The obtaining unit 310 is configured to obtain an image generation network, an initial image, and a plurality of preset image features.

In some implementations, the obtaining unit 310 may be specifically configured to:

obtain, according to a distribution feature type of random variables, a plurality of original features through sampling; and

map the plurality of original features to a preset feature space, to obtain the plurality of preset image features.

In some implementations, the obtaining unit 310 may be specifically configured to:

obtain an original image; and

perform image degrading processing on the original image, to obtain the initial image.

2. Determining unit 320

The determining unit 320 is configured to select a target feature from the plurality of preset image features, the target feature and the initial image meeting a preset similarity condition.
In some implementations, the determining unit 320 may be specifically configured to:

perform clustering processing on the plurality of preset image features, to obtain a plurality of feature clusters, the feature cluster including a center feature; and

select the target feature from the center features of the plurality of feature clusters.

In some implementations, selecting the target feature from the center features of the plurality of feature clusters includes:

inputting the center feature to the image generation network, to generate a center image;

determining a target image from the center image, the target image being the center image that meets a preset similarity with the initial image; and

determining the center feature corresponding to the target image as the target feature.

In some implementations, determining the target image from the center images includes:

calculating a feature distance between the center image and the initial image; and

determining the center image that has a shortest feature distance from the initial image as the target image.

3. Adjustment unit 330

The adjustment unit 330 is configured to input the target feature and an initial offset parameter to the image generation network, and adjust the initial offset parameter according to a difference between an output image of the image generation network and the initial image, to obtain a target offset parameter.
In some implementations, the adjustment unit 330 may be specifically configured to:

input the target feature and the initial offset parameter to the image generation network, to generate a first image;

perform image degrading processing on the first image, to obtain a second image;

calculate an offset loss value between the initial image and the second image based on a constraint condition for the initial offset parameter; and

adjust the initial offset parameter according to the offset loss value, to obtain the target offset parameter.

In some implementations, the constraint condition for the initial offset parameter includes an offset parameter constraint item, and the process of calculating an offset loss value between the initial image and the second image based on a constraint condition for the initial offset parameter includes:

calculating a first loss between the initial image and the second image;

performing regularization processing on the initial offset parameter, to obtain the offset parameter constraint item; and

constraining the first loss item by using the offset parameter constraint item, to obtain the offset loss value.

In some implementations, the adjustment unit 330 may further be configured to:

input the target feature and the target offset parameter to the image generation network, to generate a third image;

perform image degrading processing on the third image, to obtain a fourth image;

calculate a network loss value between the initial image and the fourth image based on a constraint condition for the image generation network; and

adjust a network parameter of the image generation network according to the network loss value, to obtain an adjusted image generation network, the adjusted image generation network being configured to generate the optimized image.

In some implementations, the constraint condition for the current image generation network includes a network constraint item, and the process of calculating a network loss value between the initial image and the fourth image based on a constraint condition for the image generation network includes:

calculating a second loss between the initial image and the fourth image;

calculating the network constraint based on an output result of an initial image generation network and an output result of a current image generation network; and

constraining the second loss item by using the network constraint item, to obtain the network loss value.

In some implementations, the process of calculating the network constraint based on an output result of an initial image generation network and an output result of a current image generation network includes:

inputting the target feature and the target offset parameter to the initial image generation network, to generate an initial image, and inputting the target feature and the target offset parameter to the current image generation network, to generate a current image; and

calculating the network constraint based on the initial image and the current image.

4. Generation unit 340

The generation unit 340 is configured to input the target feature and the target offset parameter to the image generation network, to generate an optimized image.
During specific implementation, the foregoing units may be implemented as independent entities, or may be combined arbitrarily and implemented as the same entity or a plurality of entities. For specific implementation of the foregoing units, reference can be made to all method embodiments of the present disclosure, so the details are not described herein again.
Therefore, in all embodiments of the present disclosure, the target feature corresponding to the initial image may be selected from the plurality of preset image features, and the target offset parameter may be obtained through adjustment. The optimized image may be generated by using the target feature in combination with the target offset parameter, to improve an optimization effect of the image.
According to all embodiments of the present disclosure, an electronic device is provided, where the electronic device may be a device such as a terminal or a server. The terminal may be a mobile phone, a tablet computer, an intelligent Bluetooth device, a notebook computer, a personal computer, or the like. The server may be a single server or a server cluster that includes a plurality of servers, or the like.
In all embodiments of the present disclosure, the image optimization apparatus may be integrated into a plurality of electronic devices. For example, the image optimization apparatus may be integrated into a plurality of servers, and the image optimization method in the present disclosure is implemented by using the plurality of servers.
In all embodiments of the present disclosure, a detailed description may be provided by using an example in which the electronic device in this embodiment is a server. For example, FIG. 4 is a schematic structural diagram of a server according to an embodiment of the present disclosure. Specifically,
the server may include components such as a processor 410 including one or more processing cores, a memory 420 including one or more computer-readable storage media, a power supply 430, an input module 440, and a communication module 450. A person skilled in the art may understand that the server structure shown in FIG. 4 does not constitute a limit to the server. The server may include more or fewer parts than those shown in the figure, may combine some parts, or may have different part arrangements.

The processor 410 is a control center of the server, and is connected to various parts of the entire server by using various interfaces and lines. By running or executing a software program and/or a module stored in the memory 420, and invoking data stored in the memory 420, the processor 410 executes various functions of the server and performs data processing. In all embodiments of the present disclosure, the processor 410 may include one or more processing cores. In some embodiments, the processor 410 may integrate an application processor and a modem. The application processor mainly processes an operating system, a user interface, an application program, and the like. The modem mainly processes wireless communication. It may be understood that the modem may either not be integrated into the processor 410.

The memory 420 may be configured to store a software program and a module, and the processor 410 runs the software program and the module that are stored in the memory 420, to implement various functional applications and data processing. The memory 420 may mainly include a program storage area and a data storage area. The program storage area may store an operating system, an application program required by at least one function (for example, a sound playing function and an image playing function), and the like. The data storage area may store data created according to use of the server. In addition, the memory 420 may include a high speed RAM, and may further include a non-volatile memory, such as at least one magnetic disk storage device, a flash memory, or another volatile solid storage device. Correspondingly, the memory 420 may further include a memory controller, so that the processor 410 can access the memory 420.

The server further includes the power supply 430 for supplying power to the components. In some embodiments of the present disclosure, the power supply 430 may be logically connected to the processor 410 by using a power supply management system, thereby implementing functions, such as charging, discharging, and power consumption management, by using the power supply management system. The power supply 430 may further include one or more direct current or alternating current power supplies, a re-charging system, a power failure detection circuit, a power supply converter or inverter, a power supply state indicator, and any other component.

The server may further include an input unit 440. The input unit 440 may be configured to receive input digit or character information, and generate a keyboard, mouse, joystick, optical, or track ball signal input related to the user setting and function control.

The terminal may further include the communication module 450. In all embodiments of the present disclosure, the communication module 450 may include a wireless module. The terminal may perform a short distance wireless transmission through the wireless module of the communication module 450, to provide wireless broadband Internet access for the user. For example, the communication module 450 may be configured to help a user to receive and send an email, browse a web page, access streaming media, and the like.

Although not shown in the figure, the server may further include a display unit. Details are not described herein again. Specifically, in all embodiments of the present disclosure, the processor 410 in the server may load, according to the following instructions, executable files corresponding to processes of one or more application programs into the memory 420. The processor 410 runs the application programs stored in the memory 420, to implement various functions: obtaining an image generation network, an initial image, and a plurality of preset image features; selecting a target feature from the plurality of preset image features, the target feature and the initial image meeting a preset similarity condition; inputting the target feature and an initial offset parameter to the image generation network, and adjusting the initial offset parameter according to a difference between an output image of the image generation network and the initial image, to obtain a target offset parameter; and inputting the target feature and the target offset parameter to the image generation network, to generate an optimized image.

For specific implementation of the foregoing operations, reference may be made to all embodiments of the present disclosure. Details are not described herein again.

It may be learned from the above that in all embodiments of the present disclosure, the target feature corresponding to the initial image may be selected from the plurality of image features, and the target offset parameter may be obtained through adjustment. The optimized image may be generated by using the target feature in combination with the target offset parameter, to improve an optimization effect of the image.

A person of ordinary skill in the art may understand that, all or some steps of various methods in all embodiments of the present disclosure may be implemented through instructions, or implemented through instructions controlling relevant hardware, and the instructions may be stored in a computer-readable storage medium and loaded and executed by a processor.

Accordingly, according to all embodiments of the present disclosure, a computer-readable storage medium, storing a plurality of instructions may be provided. The instructions can be loaded by a processor, to perform the steps in any image optimization method according to all embodiments of the present disclosure. For example, the instructions may perform the following steps:

obtaining an image generation network, an initial image, and a plurality of preset image features; selecting a target feature from the plurality of preset image features, the target feature and the initial image meeting a preset similarity condition; inputting the target feature and an initial offset parameter to the image generation network, and adjusting the initial offset parameter according to a difference between an output image of the image generation network and the initial image, to obtain a target offset parameter; and inputting the target feature and the target offset parameter to the image generation network, to generate an optimized image.

The storage medium may include: a read-only memory (ROM), a random access memory (RAM), a magnetic disk, an optical disc, or the like.

According to an aspect of the present disclosure, a computer program product is provided, the computer program product including a computer program, the computer program being stored in a computer-readable storage medium. A processor of a computer device reads the computer program from the computer-readable storage medium, and executes the computer program, so that the computer device performs the method provided in the various optional implementations in all embodiments of the present disclosure.

Because the computer program stored in the storage medium may perform the steps of any image optimization method provided in all embodiments of the present disclosure, the computer program can implement beneficial effects that may be implemented by any image optimization method provided in all embodiments of the present disclosure. For details, reference may be made to all embodiments of the present disclosure. Details are not described herein again.

The image optimization method and apparatus, the electronic device, the medium, and the program product provided in all embodiments of the present disclosure are described in detail above. The principle and implementations of the present disclosure are described herein by using specific examples. The descriptions of all embodiments of the present disclosure are merely used for helping understand the method and core ideas of the present disclosure. In addition, a person skilled in the art may make modifications to the specific implementations and application scope according to the idea of the present disclosure. In conclusion, the content of this specification shall not be understood as a limitation on the present disclosure.

**Claims**

1. An image optimization method, executable by an electronic device, the method comprising:

    obtaining (110) an image generation network, an initial image, and a plurality of preset image features;
    selecting (120) a target feature from the plurality of preset image features, the target feature and the initial image meeting a preset similarity condition;
    inputting (130) the target feature and an initial offset parameter to the image generation network, and adjusting the initial offset parameter according to a difference between an output image of the image generation network and the initial image, to obtain a target offset parameter; and
    inputting (140) the target feature and the target offset parameter to the image generation network, to generate an optimized image.

2. The image optimization method according to claim 1, wherein the selecting a target feature from the plurality of preset image features comprises:

    performing clustering processing on the plurality of preset image features, to obtain a plurality of feature clusters, each of the plurality of feature clusters comprising a center feature; and
    selecting the target feature from the center features of the plurality of feature clusters.

3. The image optimization method according to claim 2, wherein the selecting the target feature from the center features of the plurality of feature clusters comprises:

    inputting the center feature to the image generation network, to generate a center image;
    determining a target image from the center image, the target image being the center image that meets the preset similarity with the initial image; and
    determining the center feature corresponding to the target image as the target feature.

4. The image optimization method according to claim 3, wherein the determining a target image from the center image comprises:

    calculating a feature distance between the center image and the initial image; and
    determining the center image that has a shortest feature distance from the initial image as the target image.

5. The image optimization method according to any one of claims 1 to 4, wherein the inputting the target feature and an initial offset parameter to the image generation network, and adjusting the initial offset parameter according to a difference between an output image of the image generation network and the initial image, to obtain a target offset parameter comprises:

inputting the target feature and the initial offset parameter to the image generation network, to generate a first image;

performing image degrading processing on the first image, to obtain a second image;

calculating an offset loss value between the initial image and the second image based on a constraint condition for the initial offset parameter; and

adjusting the initial offset parameter according to the offset loss value, to obtain a target offset parameter.

6. The image optimization method according to claim 5, wherein the constraint condition for the initial offset parameter comprises an offset parameter constraint, and the calculating an offset loss value between the initial image and the second image based on a constraint condition for the initial offset parameter comprises:

calculating a first loss between the initial image and the second image;

performing regularization processing on the initial offset parameter, to obtain the offset parameter constraint; and

constraining the first loss by using the offset parameter constraint, to obtain the offset loss value.

7. The image optimization method according to claim 5, wherein after the inputting the target feature and an initial offset parameter to the image generation network, and adjusting the initial offset parameter according to a difference between an output image of the image generation network and the initial image, to obtain a target offset parameter, the method further comprises:

inputting the target feature and the target offset parameter to the image generation network, to generate a third image;

performing image degrading processing on the third image, to obtain a fourth image;

calculating a network loss value between the initial image and the fourth image based on a constraint condition for the image generation network; and

adjusting a network parameter of the image generation network according to the network loss value, to obtain an adjusted image generation network, the adjusted image generation network being configured to generate the optimized image.

8. The image optimization method according to claim 7, wherein the constraint condition for the image generation network comprises a network constraint, and the calculating a network loss value between the initial image and the fourth image based on a constraint condition for the image generation network comprises:

calculating a second loss between the initial image and the fourth image;

calculating the network constraint based on an output result of an initial image generation network and an output result of a current image generation network; and

constraining the second loss by using the network constraint, to obtain the network loss value.

9. The image optimization method according to claim 8, wherein the calculating the network constraint based on an output result of an initial image generation network and an output result of a current image generation network comprises:

inputting the target feature and the target offset parameter to the initial image generation network, to generate an initial image, and inputting the target feature and the target offset parameter to the current image generation network, to generate a current image; and

calculating the network constraint according to the initial image and the current image.

10. The image optimization method according to any one of claims 1 to 9, wherein the plurality of preset image features are obtained by:

sampling, according to a distribution feature type of random variables, to obtain a plurality of original features; and

mapping the plurality of original features to a preset feature space, to obtain the plurality of preset image features.

11. The image optimization method according to any one of claims 1 to 10, wherein the initial image is obtained in the following manner:

> obtaining an original image; and
> performing image degrading processing on the original image, to obtain the initial image.

12. An image optimization apparatus, comprising:

> an obtaining unit (310), configured to obtain an image generation network, an initial image, and a plurality of preset image features;
> a determining unit (320), configured to select a target feature from the plurality of preset image features, the target feature and the initial image meeting a preset similarity condition;
> an adjustment unit (330), configured to input the target feature and an initial offset parameter to the image generation network, and adjust the initial offset parameter according to a difference between an output image of the image generation network and the initial image, to obtain a target offset parameter; and
> a generation unit (340), configured to input the target feature and the target offset parameter to the image generation network, to generate an optimized image.

13. An electronic device, comprising a processor (410) and a memory (420), the memory (420) storing a plurality of instructions; and the processor (410) being configured to load the instructions from the memory (420), to perform operations of the image optimization method according to any one of claims 1 to 11.

14. A computer-readable storage medium, storing a plurality of instructions, the instructions being loaded by a processor (410), to perform operations of the image optimization method according to any one of claims 1 to 11.

15. A computer program product, comprising a computer program, the computer program, when executed by a processor (410), implementing operations of the image optimization method according to any one of claims 1 to 11.

A plurality of
preset random
features

Initial offset
parameter

Target
feature

Initial image ⟶

Target offset
parameter

Optimized image

Image optimization
apparatus

FIG. 1a

---

Obtain an image generation network, an initial image and a plurality
of preset image features                                                         110

Select a target feature from the plurality of preset image features, the
target feature and the initial image meeting a preset similarity
condition                                                                        120

Input the target and an initial offset parameter to the image generation
network, and adjust the initial offset parameter according to a
difference between an output image of the image generation network
and the initial image, to obtain a target offset parameter                       130

Input the target feature and the target offset parameter to the image
generation network, to generate an optimized image                               140

FIG. 1b

Method 1            Method 2

FIG. 1c

FIG. 1d

Target feature

Target offset parameter

Current image generation network

Third image

Degrade

Fourth image

Initial image

Adjust a network parameter

Constraint condition for an image generation network

—Constrain→

Network loss value

FIG. 1e

StyleGAN-XL network

Mapping network

Generation network

FIG. 2a

| Perform image degrading processing on an original image, to obtain an initial image | 210 |

| Perform clustering processing on a plurality of preset image features, to obtain a plurality of feature clusters, the feature cluster including a center feature | 220 |

| Select a target feature from the center features of the plurality of feature clusters | 230 |

| Input the target feature and an initial offset parameter to the image generation network, and adjust the initial offset parameter according to a difference between an output image of the image generation network and the initial image, to obtain a target offset parameter | 240 |

| Adjust a network parameter of the image generation network according to the target feature, the target offset parameter and the initial image, to obtain an adjusted image generation network | 250 |

| Input the target feature and the target offset parameter to the adjusted image generation network, to generate an optimized image | 260 |

FIG. 2b

| Network parameter of an image generation network | Offset item | First stage |
| Fix | Adjust | |

| Network parameter of the image generation network | Offset item | Second stage |
| Adjust | Fix | |

FIG. 2c

| Input | PULSE method | DGP method | PTI method | This application | GT |

FIG. 2d

| Task | Index | DGP method | PTI method | This application |
|------|-------|-----------|-----------|------------------|
| Image inpainting | LPIPS↓ | 0. 2074 | 0. 1226 | 0. 1211 |
| | FID↓ | 308. 16 | 127. 71 | 80. 20 |
| Image colorization | LPIPS↓ | 0. 2687 | 0. 2005 | 0. 1842 |
| | FID↓ | 217. 67 | 106. 07 | 92. 48 |
| Image super definition | LPIPS↓ | 0. 2545 | 0. 2284 | 0. 2224 |
| | NIQE↓ | 8. 5156 | 6. 1416 | 5. 5686 |

FIG. 2e

Obtaining unit — 310

Determining unit — 320

Adjustment unit — 330

Generation unit — 340

FIG. 3

450 — Communication module

430 — Power supply

410 — Processor

420 — Memory

440 — Input module

FIG. 4

## INTERNATIONAL SEARCH REPORT

International application No.

**PCT/CN2023/120931**

| A. | CLASSIFICATION OF SUBJECT MATTER |
|----|----|

G06T5/00(2006.01)i

According to International Patent Classification (IPC) or to both national classification and IPC

| B. | FIELDS SEARCHED |
|----|----|

Minimum documentation searched (classification system followed by classification symbols)

IPC: G06T5/-

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 图像, 优化, 网络, 特征, 相似, 参数, 偏移, image, optimization, network, feature, similar, parameter, offset

| C. | DOCUMENTS CONSIDERED TO BE RELEVANT |
|----|----|

| Category* | Citation of document, with indication, where appropriate, of the relevant passages | Relevant to claim No. |
|----|----|----|
| A | CN 115131218 A (TENCENT TECHNOLOGY (SHENZHEN) CO., LTD.) 30 September 2022 (2022-09-30)<br>claims 1-15, and description, paragraphs [0040]-[0216] | 1-15 |
| A | CN 111488865 A (TENCENT TECHNOLOGY (SHENZHEN) CO., LTD.) 04 August 2020 (2020-08-04)<br>claims 1-15, and description, paragraphs [0038]-[0138] | 1-15 |
| A | US 2021365710 A1 (BOE TECHNOLOGY GROUP CO., LTD.) 25 November 2021 (2021-11-25)<br>claims 1-21, and description, paragraphs [0037]-[0138] | 1-15 |

☐ Further documents are listed in the continuation of Box C.  ☑ See patent family annex.

| * | Special categories of cited documents: |
|----|----|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|----|----|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|----|----|
| **03 November 2023** | **26 December 2023** |

| Name and mailing address of the ISA/CN | Authorized officer |
|----|----|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/120931**

| Patent document cited in search report | | | Publication date (day/month/year) | Patent family member(s) | | | Publication date (day/month/year) |
|---|---|---|---|---|---|---|---|
| CN | 115131218 | A | 30 September 2022 | None | | | |
| CN | 111488865 | A | 04 August 2020 | EP | 4050511 | A1 | 31 August 2022 |
| | | | | EP | 4050511 | A4 | 28 December 2022 |
| | | | | US | 2022261968 | A1 | 18 August 2022 |
| | | | | WO | 2022001509 | A1 | 06 January 2022 |
| | | | | JP | 2023515654 | A | 13 April 2023 |
| | | | | CN | 111488865 | B | 27 October 2020 |
| US | 2021365710 | A1 | 25 November 2021 | WO | 2020168844 | A1 | 27 August 2020 |
| | | | | US | 11403838 | B2 | 02 August 2022 |

Form PCT/ISA/210 (patent family annex) (July 2022)

**REFERENCES CITED IN THE DESCRIPTION**

**Patent documents cited in the description**

- CN 202211252059